# EUROPÄISCHE PATENTSCHRIFT

(11) **EP 0 964 034 B1**
(45) Veröffentlichungstag und Bekanntmachung des Hinweises auf die Patenterteilung: **04.10.2001**
(21) Anmeldenummer: 99118521.6
(22) Anmeldetag: 13.02.1995
(51) Int. Cl.: C09B 67/22, D06P 3/66

(54) **Reaktivfarbstoffmischungen und deren Verwendung zum Färben und Bedrucken von hydroxy- und/oder carbonamidgruppenhaltigen Fasermaterialien**
Reactive dye mixtures and their use for dyeing and printing fibrous materials containing hydroxyl and carbonamide groups
Mélanges de colorants réactifs et leur utilisation pour la teinture et l'impression de matières fibreuses contenant des groupes hydroxyle et carbonamide

(30) Priorität: 19.02.1994 DE 4405358
(43) Veröffentlichungstag der Anmeldung: 15.12.1999
(62) Teilanmeldung aus: 95101916.5
(73) Patentinhaber: DyStar Textilfarben GmbH & Co. Deutschland KG, 60318 Frankfurt am Main (DE)
(72) Erfinder: Russ, Werner Hubert, Dr., 65439 Flörsheim (DE); Hussong, Kurt, Dr, 65812 Bad Soden (DE); Schulze-Braucks, Manfred, Dr., 65719 Hofheim (DE); Kunze, Michael, 65719 Hofheim (DE)
(74) Vertreter: Muley, Ralf, Dr.

(56) Entgegenhaltungen:
- DE-A- 3 209 533
- DE-B- 2 442 553

## Beschreibung

Die Erfindung liegt auf dem technischen Gebiet der faserreaktiven Farbstoffe.

Es ist bekannt (EP-A-0 525 805), mehrere Reaktivfarbstoffe miteinander zu mischen, um bestimmte Mischfarben, beispielsweise beige, zu erhalten. Weiterhin ist bekannt, daß beim Trichromiefärben Farbstoffe der drei Grundfarben Blau, Rot und Gelb miteinander gemischt werden (EP-A-0 437 184). Mischfarbtöne zeigen oft Nachteile in der Farbtiefe, im Aufbau, in den Echtheiten, in der Auswaschbarkeit und teilweise fehlenden Ätzbarkeit.

Die der Erfindung zugrundeliegende Aufgabe war es, geeignete Reaktivfarbstoffmischungen zum Färben und Bedrucken, insbesondere zum Nuancieren, von cellulosehaltigen Fasermaterialien und Polyamidfasern zu finden, die unter Berücksichtigung von Brillanz, Phototropie, Metamerie und Substantivität sowie Blockiereffekten sich vorteilhaft ergänzen. Es zeigte sich, daß nur spezielle Farbstoffkombinationen die gestellte Aufgabe lösen können.

Gegenstand der vorliegenden Erfindung sind Reaktivfarbstoffmischungen, die im wesentlichen 90 bis 99,99 Gew.-% eines Farbstoffes der nachstehend angegebenen und definierten allgemeinen Formel (7), 0 bis 10 Gew.-% eines Farbstoffes der nachstehend angegebenen und definierten allgemeinen Formel (1) und 0 bis 10 Gew.-% eines Farbstoffes der nachstehend angegebenen und definierten allgemeinen Formel (2) enthalten, wobei die Summe der Farbstoffe jeweils 100 Gew.-% ergibt und die Mischungen mindestens zwei Reaktivfarbstoffe enthalten.

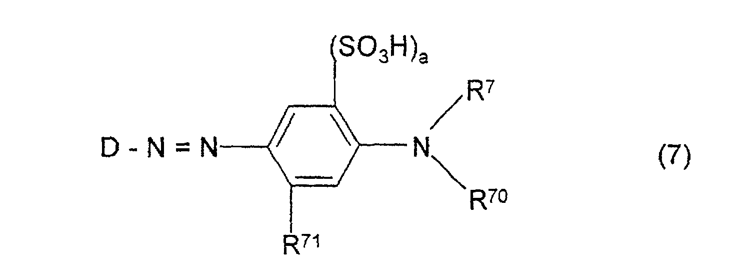

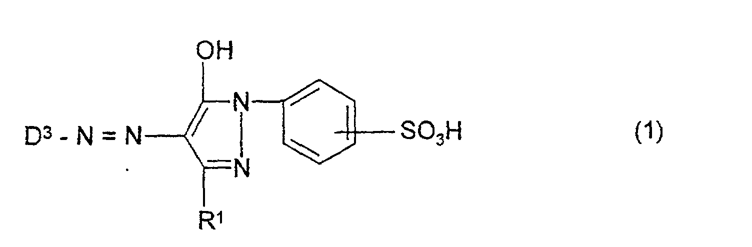

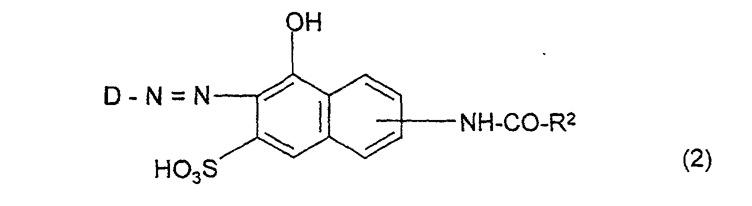

Die Formelreste in diesen Formeln haben jeweils unabhängig voneinander folgende Bedeutungen:
- D: ist phenyl-SO₂-CH₂-CH₂-Z, worin Z gleich -OSO₃H, -Cl oder -S-SO₃H ist und phenyl durch 1 oder 2 Methyl-, Methoxy- oder Sulfogruppen substituiert sein kann;
- D³: ist Phenyl, das durch eine Gruppe der Formel -SO₂-CH₂-CH₂-Z mit Z der obengenannten Bedeutung substituiert ist und noch durch 1 oder 2 Methyl-, Methoxy- oder Sulfogruppen substituiert sein kann, oder ist Naphthyl oder Naphthyl, das durch eine Gruppe der Formel -SO₂-CH₂-CH₂-Z mit Z der obengenannten Bedeutung substituiert ist, wobei der Naphthyl-Rest jeweils mit bis zu 3 Sulfogruppen substituiert sein kann, oder ist eine Gruppe der Formel phenyl-CONH-phenyl-SO₂-Y mit Y gleich einer Gruppe der Formel -CH=CH₂ oder einer Gruppe der Formel -CH₂-CH₂-Z, in welcher Z der Substituent -OSO₃H, -Cl oder -S-SO₃H bedeutet;
- R¹: ist Methyl, Carboxy oder Aminocarbonyl;
- R²: ist Methyl oder Phenyl;
- R⁷: ist H, C₁-C₄-Alkyl oder -CH₂-CH₂-OSO₃H ;
- R⁷⁰: ist H, C₁-C₄-Alkyl oder -CH₂-CH₂-OSO₃H ;
- R⁷¹: ist Cl, -NH-CO-CH₃ oder -NH-CO-NH₂ ;
- a: ist die Zahl 0 oder 1.

Farbstoffe mit gleichem Chromophor entsprechend einer der genannten drei allgemeinen Formeln können unterschiedliche faserreaktiven Gruppen entsprechend der Formel -SO₂-Y obiger Bedeutung besitzen. Insbesondere können die Farbstoffmischungen Farbstoffe gleichen Chromophors enthalten, in denen die faserreaktiven Gruppen -SO₂-Y zum einen Vinylsulfonylgruppen und zum anderen β-Chlorethylsulfonyl- oder Thiosulfatoethylsulfonyl- oder bevorzugt β-Sulfatoethylsulfonyl-Gruppen sind. Enthalten die Farbstoffgemische die jeweiligen Farbstoffkomponenten in Form eines Vinylsulfonyl-Farbstoffes, so liegt der Farbstoffanteil des jeweiligen Vinylsulfonylfarbstoffes zu dem jeweiligen β-Chlor- oder β-Thiosulfato- oder Sulfatoethylsulfonyl-Farbstoff bei bis zu etwa 30 %, bezogen auf den jeweiligen Farbstoffchromophor, vor.

Die erfindungsgemäßen Farbstoffmischungen können als Präparation in fester oder in flüssiger (gelöster) Form vorliegen. in fester Form enthalten sie im allgemeinen die bei wasserlöslichen und insbesondere faserreaktiven Farbstoffen üblichen Elektrolytsalze, wie Natriumchlorid, Kaliumchlorid, Lithiumchlorid, Lithiumsulfat und Natriumsulfat, und können des weiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die Farbstoffmischungen als Farbstoffpulver mit einem Gehalt von 10 bis 70 Gew.-%, bezogen auf das Farbstoffpulver bzw. die Präparation, an einem Elektrolytsalz, das auch als Stellmittel bezeichnet wird, vor. Diese Farbstoffpulver können zudem die erwähnten Puffersubstanzen in einer Gesamtmenge von bis zu 5 %, bezogen auf das Farbstoffpulver enthalten. Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wobei der Elektrolytsalzgehalt in diesen wäßrigen Lösungen bevorzugt unterhalb 10 Gew.-%, bezogen auf die wäßrige Lösung, beträgt; die wäßrigen Lösungen können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen können in üblicher Weise hergestellt werden, so durch mechanisches Mischen der einzelnen Farbstoffe in den erforderlichen Anteilen. Dabei kann durch Variation der Farbstoffanteile gezielt Einfluß auf die Nuance genommen werden. Flüssigpräparationen der erfindungsgemäßen Farbstoffmischungen können hergestellt werden, indem die pulverförmigen Einzelkomponenten in Wasser gelöst und miteinander vermischt werden, oder indem man die bei der Herstellung der Einzelkomponenten erhaltenen wäßrigen Lösungen miteinander vermischt oder die Reaktionslösung der in einem Rührapparat nebeneinander hergestellten Farbstoffe durch Verdünnen mit Wasser oder Aufstärken (Verdampfen von Wasser) auf die gewünschte Stärke (%-Gehalt) bringt. Das Aufstärken kann auch durch Zumischen des pulverförmigen Farbstoffgemisches zu einer niedrigprozentigen Lösung des Farbstoffgemisches erfolgen. Dabei können hochkonzentrierte Farbstoffeinstellungen erzielt werden. Weiterhin kann durch bekannte Membranverfahren der Salzgehalt reduziert werden. Die wäßrige flüssige Farbstoffzusammensetzung wird unter Verwendung einer Mineralsäure oder Base auf einen pH-Wert von 3 bis 6 eingestellt. Ebenso kann ein Puffer, beispielsweise eine Carbonsäure oder Phosphorsäure, und ein grenzflächenaktives Mittel in die wäßrige flüssige Farbstoffzusammensetzung mit einbezogen werden.

Die erfindungsgemäßen Farbstoffmischungen liefern nach den in der Technik für faserreaktive Farbstoffe zahlreich beschriebenen Anwendungs- und Fixierverfahren auf hydroxy- und/oder carbonamidgruppenhaltigen Fasermaterialien Färbungen mit gutem Farbaufbau und guter Auswaschbarkeit nicht fixierter Farbstoffanteile. Darüber hinaus sind die erhaltenen Färbungen teilweise gut ätzbar. Die erfindungsgemäßen Farbstoffmischungen eignen sich sowohl zum Färben von Cellulose nach dem diskontinuierlichen Ausziehverfahren, für halbkontinuierliche Färbeverfahren, insbesondere Klotzkaltverweilverfahren oder pad steam sowie zum Drucken.

Gegenstand der vorliegenden Erfindung ist deshalb auch die Verwendung der erfindungsgemäßen Farbstoffmischungen zum Färben (einschließlich Bedrucken) von hydroxy- und/oder carbonamidgruppenhaltigen Fasermaterialien sowie Verfahren zum Färben solcher Fasermaterialien unter Verwendung einer erfindungsgemäßen Farbstoffmischung, indem man die Farbstoffmischung in gelöster Form auf das Substrat appliziert und die Farbstoffe durch Einwirkung eines alkalisch wirkenden Agenz oder durch Hitze oder durch beide Maßnahmen auf der Faser fixiert.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Anwendung der erfindungsgemäßen Farbstoffmischungen erfolgt nach allgemein bekannten Verfahren zum Färben und Bedrucken von Fasermaterialien gemäß den bekannten Anwendungstechniken für faserreaktive Farbstoffe. Da die Farbstoffe der erfindungsgemäßen Farbstoffmischungen zueinander ein sehr gutes Kombinationsverhalten zeigen, können die erfindungsgemäßen Farbstoffmischungen auch mit Vorteil in die Ausziehfärbeverfahren eingesetzt werden. Demgemäß erhält man mit ihnen beispielsweise auf Cellulosefasern nach den Ausziehverfahren aus langer Flotte bei Temperaturen zwischen 40 und 105°C, gegebenenfalls bei Temperaturen bis zu 130°C, und gegebenenfalls in Gegenwart von üblichen Färbereihilfsmitteln unter Verwendung von säurebindenden Mitteln und gegebenenfalls neutralen Salzen, wie Natriumchlorid oder Natriumsulfat, Färbungen in sehr guten Farbausbeuten und mit ausgezeichnetem Farbaufbau und gleicher Nuance. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Ebenfalls erhält man nach den üblichen Druckverfahren für Cellulosefasern, - die entweder einphasig durchgeführt werden können, beispielsweise durch Bedrucken mit einer Natriumcarbonat oder ein anderes säurebindendes Mittel und das Farbmittel enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedrucken Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, - farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Farbstoffmischungen erhaltenen Fixiergrade sehr hoch. Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumhydrogenphosphat und Dinatriumhydrogenphosphat.

Durch die Behandlung der Farbstoffe der erfindungsgemäßen Farbstoffmischungen mit den säurebindenden Mitteln, gegebenenfalls unter Wärmeeinwirkung, werden die Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann beispielsweise dem Färbebad Essigsäure und/oder Ammoniumsulfat und/oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

### Beispiel 1

1000 g des aus der DE-A-31 34 357 bekannten Farbstoffes der Formel (B10) 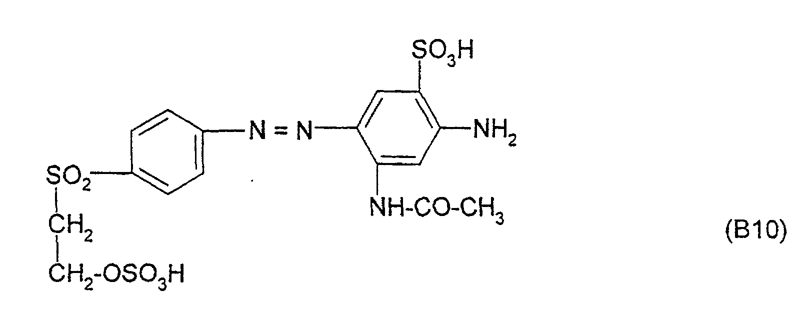 werden mit 3 g des aus der CA-A-519 978 bekannten Farbstoffes der Formel (B4) 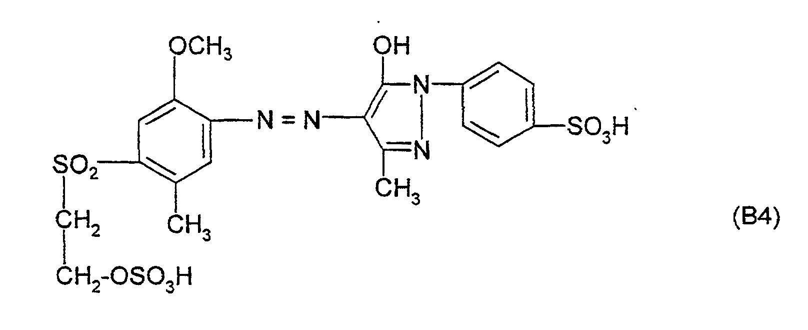 in einem mechanischen Mischer gemischt. Man erhält 1003 g einer Farbstoffmischung, die Cellulose in goldgelben Tönen färbt.

### Beispiel 2

1000 g des Farbstoffes der Formel (B10) werden mit 3 g des aus der CA-A-519 978 bekannten Farbstoffes der Formel (B14) 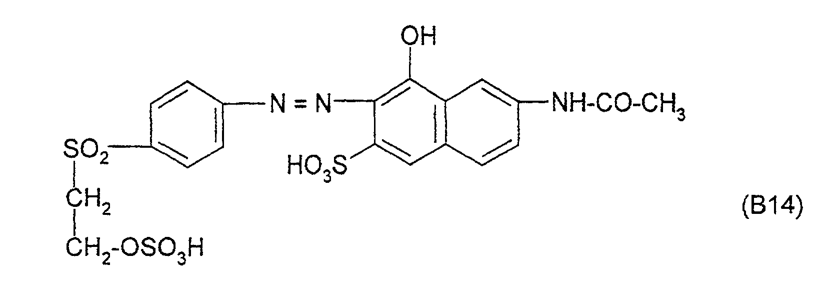 gemischt. Man erhält eine Farbstoffmischung, die Cellulose in goldgelben Tönen färbt.

### Beispiel 3

1000 g des aus der DE-A-26 53 478 bekannten Farbstoffes der Formel (B11) 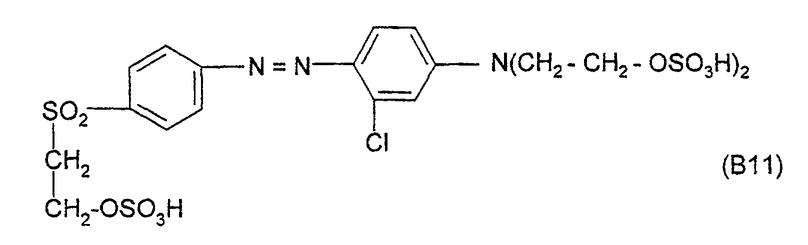 werden mit 22,5 g des Farbstoffes der Formel (B4) gemischt. Man erhält eine Farbstoffmischung, die Cellulose in goldgelben Tönen färbt.

### Beispiel 4

1000 g des Farbstoffes der Formel (11) werden mit 5,5 g des Farbstoffes der Formel (B14) gemischt. Man erhält eine Farbstoffmischung, die Cellulose in goldgelben Tönen färbt.

## Patentansprüche

1. Reaktivfarbstoffmischungen, die im wesentlichen 90 bis 99,99 Gew.-% eines Farbstoffes der nachstehend angegebenen und definierten allgemeinen Formel (7), 0 bis 10 Gew.-% eines Farbstoffes der nachstehend angegebenen und definierten allgemeinen Formel (1) und 0 bis 10 Gew.-% eines Farbstoffes der nachstehend angegebenen und definierten allgemeinen Formel (2) enthalten, wobei die Summe der Farbstoffe jeweils 100 Gew.-% ergibt und die Mischungen mindestens zwei Reaktivfarbstoffe enthalten 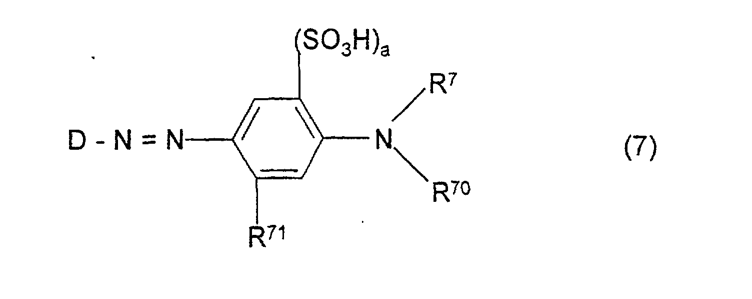 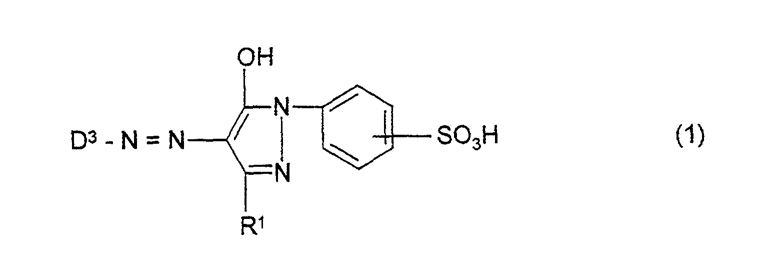 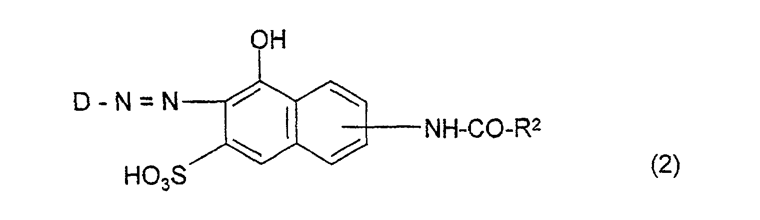 worin bedeuten:
D ist phenyl-SO₂-CH₂-CH₂-Z, worin Z gleich -OSO₃H, -Cl oder -S-SO₃H ist und phenyl durch 1 oder 2 Methyl-, Methoxy- oder Sulfogruppen substituiert sein kann;
D³ ist Phenyl, das durch eine Gruppe der Formel -SO₂-CH₂-CH₂-Z mit Z der obengenannten Bedeutung substituiert ist und noch durch 1 oder 2 Methyl-, Methoxy- oder Sulfogruppen substituiert sein kann, oder ist Naphthyl oder Naphthyl, das durch eine Gruppe der Formel -SO₂-CH₂-CH₂-Z mit Z der obengenannten Bedeutung substituiert ist, wobei der Naphthyl-Rest jeweils mit bis zu 3 Sulfogruppen substituiert sein kann, oder ist eine Gruppe der Formel phenyl-CONH-phenyl-SO₂-Y mit Y gleich einer Gruppe der Formel -CH=CH₂ oder einer Gruppe der Formel -CH₂-CH₂-Z, in welcher Z der Substituent -OSO₃H, -Cl oder -S-SO₃H bedeutet;
R¹ ist Methyl, Carboxy oder Aminocarbonyl;
R² ist Methyl oder Phenyl;
R⁷ ist H, C₁-C₄-Alkyl oder -CH₂-CH₂-OSO₃H;
R⁷⁰ ist H, C₁-C₄-Alkyl oder -CH₂-CH₂-OSO₃H ;
R⁷¹ ist Cl, -NH-CO-CH₃ oder -NH-CO-NH₂ ;
a ist die Zahl 0 oder 1.

2. Verwendung einer Reaktivfarbmischung von Anspruch 1 zum Färben und Bedrucken von hydroxy- und/oder carbonamidgruppenhaltigen Fasermaterialien.

3. Verwendung nach Anspruch 2, **dadurch gekennzeichnet, daß** das Fasermaterial aus Cellulosefasern, vorzugsweise aus Baumwolle, regenerierten Cellulosefasern, Viskosekunstseide, Wolle, Seide oder Polyamid-4 besteht.

4. Verfahren zum Färben und Bedrucken von hydroxy- und/oder carbonamidgruppenhaltigem Fasermaterialien, **dadurch gekennzeichnet, daß** man eine Reaktivfarbstoffmischung von Anspruch 1 in gelöster Form auf das Fasermaterial appliziert und die Farbstoffe durch Einwirkung eines alkalisch wirkenden Mittels oder durch Hitze oder durch beide Maßnahmen auf der Faser fixiert.

## Claims

1. Reactive dye mixtures containing essentially 90 to 99.99% by weight of a dye of the hereinbelow indicated and defined general formula (7), 0 to 10% by weight of a dye of the hereinbelow indicated and defined general formula (1) and 0 to 10% by weight of a dye of the hereinbelow indicated and defined general formula (2), the dyes in each case adding up to 100% by weight and the mixtures containing at least two reactive dyes 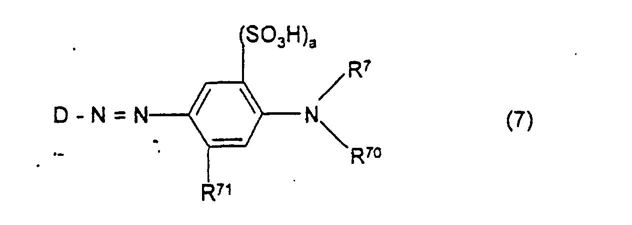 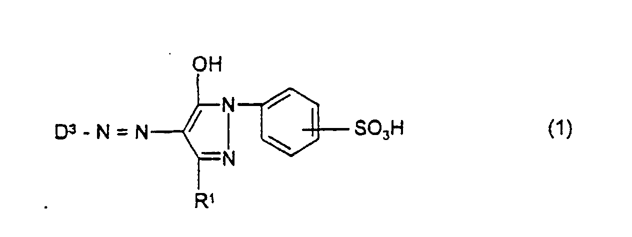 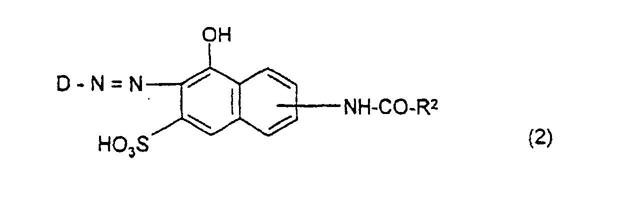 where
D is phenyl-SO₂-CH₂-CH₂-Z, where Z is -OSO₃H, -Cl or -S-SO₃H and phenyl may be substituted by 1 or 2 methyl, methoxy or sulfo groups;
D³ is phenyl which is substituted by a group of the formula -SO₂-CH₂-CH₂-Z where Z is as defined above and may additionally be substituted by 1 or 2 methyl, methoxy or sulfo groups, or is naphthyl or naphthyl which is substituted by a group of the formula -SO₂-CH₂-CH₂-Z where Z is as defined above, where the naphthyl radical may in either case be substituted by up to 3 sulfo groups, or is a group of the formula phenyl-CONH-phenyl-SO₂Y where Y is a group of the formula -CH=CH₂ or a group of the formula -CH₂-CH₂-Z, where Z is -OSO₃H, -Cl or -S-SO₃H;
R¹ is methyl, carboxyl or aminocarbonyl;
R² is methyl or phenyl;
R⁷ is H, C₁-C₄-alkyl or -CH₂-CH₂-OSO₃H;
R⁷⁰ is H, C₁-C₄-alkyl or -CH₂-CH₂-OSO₃H;
R⁷¹ is Cl, -NH-CO-CH₃ or -NH-CO-NH₂;
a is 0 or 1.

2. Use of a reactive dye mixture of claim 1 for dyeing and printing hydroxyl- and/or carboxamido-containing fiber materials.

3. Use according to claim 2, **characterized in that** the fiber material comprises cellulose fibers, preferably cotton, regenerated cellulose fibers, filament viscose, wool, silk or nylon-4.

4. A process for dyeing and printing hydroxyl- and/or carboxamido-containing fiber materials, **characterized in that** a reactive dye mixture of claim 1 is applied to the fiber material in dissolved form and the dyes are fixed on the fiber by the action of an alkaline agent or by heat or by both measures.

## Revendications

1. Mélanges de colorants réactifs comprenant essentiellement de 90 à 99,99% en poids d'un colorant de formule générale (7) indiquée et définie ci-dessous, de 0 à 10% en poids d'un colorant de formule générale (1) indiquée et définie ci-dessous et de 0 à 10% en poids d'un colorant de formule générale (2) indiquée et définie ci-dessous, la somme des colorants étant, dans chaque cas, de 100% en poids et les mélanges comprenant au moins deux colorants réactifs 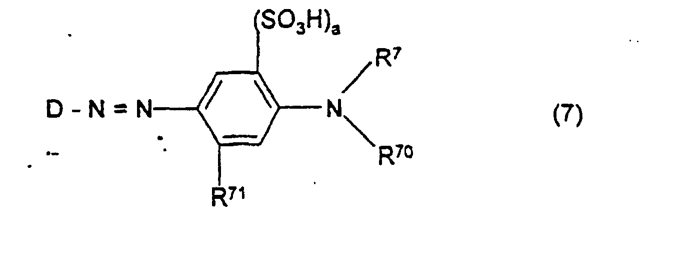 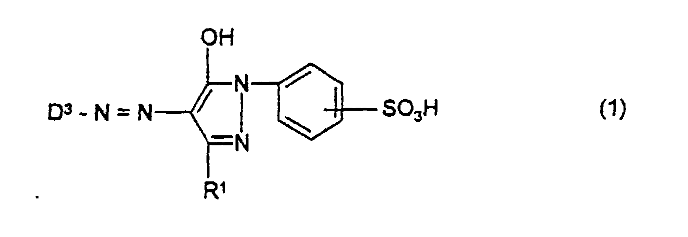 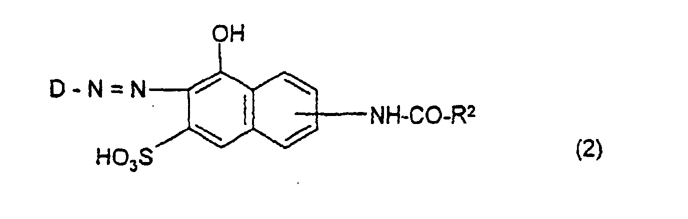 dans lesquelles :
D est un phényle-SO₂-CH₂-CH₂-Z, où Z est -OSO₃H, -Cl ou -S-SO₃H et le phényle peut être substitué par 1 ou 2 groupes méthyle, méthoxy ou sulfo ;
D³ est un phényle substitué par un groupe de formule -SO₂-CH₂-CH₂-Z dans laquelle Z a la signification susmentionnée, et qui peut être également substitué par 1 ou 2 groupes méthyle, méthoxy ou sulfo, ou est un naphtyle ou un naphtyle substitué par un groupe de formule -SO₂-CH₂-CH₂-Z dans laquelle Z a la signification susmentionnée, le radical naphtyle pouvant être substitué, dans chaque cas, par jusqu'à 3 groupes sulfo, ou est un groupe de formule phényl-CONH-phényl-SO₂-Y dans laquelle Y est un groupe de formule -CH=CH₂ ou un groupe de formule -CH₂-CH₂-Z dans laquelle Z représente le substituant -OSO₃H, -Cl ou -S-SO₃H ;
R¹ est un méthyle, un carboxy ou un aminocarbonyle ;
R² est un méthyle ou un phényle;
R⁷ est H, C₁-C₄-alkyle ou -CH₂-CH₂-=OSO₃H;
R⁷⁰ est H, C₁-C₄-alkyle ou -CH₂-CH₂-=OSO₃H;
R⁷¹ est Cl, -NH-CO-CH₃ ou -NH-CO-NH₂;
a est le nombre 0 ou 1.

2. Utilisation d'un mélange de colorants réactifs selon la revendication 1, pour la teinture et l'impression de matières fibreuses renfermant des groupes hydroxy et/ou carboxamide.

3. Utilisation selon la revendication 2, **caractérisée en ce que** la matière fibreuse est constituée de fibres cellulosiques, de préférence de coton, de fibres cellulosiques régénérées, de rayonneviscose, de laine, de soie ou de nylon 4.

4. Procédé de teinture et d'impression de matières fibreuses renfermant des groupes hydroxy et/ou carboxamide, **caractérisé en ce que** l'on applique un mélange de colorants réactifs selon la revendication 1 sous forme dissoute sur la matière fibreuse et on fixe les colorants sur la fibre sous l'action d'un agent alcalin ou par la chaleur ou par les deux mesures.
